(19)

Europäisches
Patentamt

European
Patent Office

Office européen
des brevets

(11) **EP 4 692 974 A1**

(12) **EUROPEAN PATENT APPLICATION**
published in accordance with Art. 153(4) EPC

(43) Date of publication:
**11.02.2026 Bulletin 2026/07**

(21) Application number: **24777963.0**

(22) Date of filing: **25.03.2024**

(51) International Patent Classification (IPC):
**G05D 3/12** (2006.01)

(52) Cooperative Patent Classification (CPC):
**Y02E 10/50**

(86) International application number:
**PCT/CN2024/083528**

(87) International publication number:
**WO 2024/199175 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.03.2023 CN 202310298072**

(71) Applicant: **Trina Solar Co., Ltd.
Changzhou, Jiangsu 213031 (CN)**

(72) Inventors:
• **SUN, Kai
Changzhou, Jiangsu 213031 (CN)**
• **ZHAO, Ming
Changzhou, Jiangsu 213031 (CN)**
• **QUAN, Peng
Changzhou, Jiangsu 213031 (CN)**
• **HUANG, Guokun
Changzhou, Jiangsu 213031 (CN)**

(74) Representative: **Casalonga
Casalonga & Partners
Bayerstraße 71/73
80335 München (DE)**

(54) **BACKTRACKING ANGLE OPTIMIZATION METHOD AND PHOTOVOLTAIC SUPPORT CONTROL SYSTEM APPLYING SAME**

(57) A backtracking angle optimization method (10), based on a series-parallel structure photovoltaic module, and a photovoltaic support control system applying same. The backtracking angle optimization method (10) is suitable for a photovoltaic system comprising multiple rows of series-parallel structure photovoltaic modules. When each row of photovoltaic modules is shielded in a manner not exceeding a first area, at least a portion of the photovoltaic modules outside of the first area may still operate at a normal power generation efficiency. The backtracking angle optimization method (10) comprises switching execution of a first optimization method and a second optimization method, the first optimization method comprising controlling each row of photovoltaic modules to shield at most a portion of the first area of the row of photovoltaic modules behind said row of photovoltaic modules, and the second optimization method comprising controlling such that there is no shielding between every two adjacent rows of photovoltaic modules.

FIG. 2

EP 4 692 974 A1

**Description**

Technical Field

The present application mainly relates to the technical field of battery tracking, and in particular to a backtracking angle optimization method based on a series-parallel structure photovoltaic module and a photovoltaic support control system applying same.

Background

A market share of new energy is gradually increasing globally, among which a photovoltaic power generation may lead a global energy revolution. It is estimated that by 2050, a capacity of the photovoltaic power generation will reach 8.5TW. Currently, photovoltaic mounting supports can be roughly divided into fixed-angle type and tracking type, wherein, tracking photovoltaic mounting supports are more popular in the market due to their lower electricity cost, higher return on investment and other advantages. Currently, tracking photovoltaic support systems generally adopt flat-ground backtracking algorithms, which are based on a principle of no obstruction between arrays, and calculate a backtracking angle according to geometric relationships. However, in the actual production and installation process, the tracking photovoltaic support systems often need to be installed on uneven terrains. Under this circumstance, original flat-ground backtracking algorithms are not accurate and even will cause shading between photovoltaic modules, resulting in a sharp drop in power generation.

Furthermore, with the emergence of series-parallel modules like half-cut photovoltaic modules, even if one portion of a module is obscured, other portion can still maintain a significant power generation output. Existing flat-ground backtracking algorithms are no longer applicable. Therefore, there is an urgent need for a backtracking angle optimization solution specifically suited for the uneven terrains and series-parallel modules like half-cut photovoltaic modules.

Summary

The technical problem to be solved by the present application is to provide a backtracking angle optimization method based on a series-parallel structure photovoltaic module and a photovoltaic support control system, especially providing a backtracking phase optimization solution for series-parallel structure photovoltaic modules on uneven terrains, thereby improving power generation in a backtracking phase.

In order to solve the above technical problems, the present application provides a backtracking angle optimization method based on a series-parallel structure photovoltaic module, the backtracking angle optimization method is suitable for a photovoltaic system using series-parallel structure photovoltaic modules, the photovoltaic system comprises multiple rows of the series-parallel structure photovoltaic modules, when each row of the photovoltaic modules is shielded in a manner not exceeding a first area, at least a portion of the photovoltaic modules outside of the first area can still operate at a normal power generation efficiency, and the backtracking angle optimization method comprises switching execution of a first optimization method and a second optimization method, wherein, the first optimization method comprises controlling the each row of the photovoltaic modules to shield at most a portion of the first area of a row of the photovoltaic modules behind the each row of the photovoltaic modules; the second optimization method comprises controlling such that there is no shielding between every two adjacent rows of the photovoltaic modules.

In one embodiment of the present application, the backtracking angle optimization method further comprises controlling the photovoltaic system using the first optimization method to adjust a tracking angle when a solar altitude angle is greater than 0 and less than a first threshold, so that the tracking angle of a last row of the photovoltaic modules is a first angle and the tracking angle of each remaining row of the photovoltaic modules is a second angle; wherein, the solar altitude angle is an angle between an incident direction of sunlight and a horizontal direction; the tracking angle is an angle between the photovoltaic module and the horizontal direction; the first angle is a maximum rotation angle of the photovoltaic modules; the second angle is the tracking angle of a said row of the photovoltaic modules when the said row of the photovoltaic modules can just shield the portion of the first area of a row of the photovoltaic modules behind the said row of the photovoltaic modules; the first threshold is the solar altitude angle when the second angle is equal to the first angle.

In one embodiment of the present application, multiple rows of the photovoltaic modules include half-cut modules, and a calculation formula of the second angle is: $B_1 = 180° - A - \arcsin\dfrac{D * \sin A}{L / 2}$ ,wherein, $B_1$ is the second angle, $A$ is an incident angle of sunlight in a plane perpendicular to an axial direction of a flat uniaxial axis, D is a horizontal distance between two adjacent rows of the photovoltaic modules, and L is a length of the photovoltaic modules along a first direction when the photovoltaic modules are at a horizontal angle; wherein, the first direction is perpendicular to the axial direction of the flat uniaxial axis; a calculation formula of the incident angle of the sunlight is:

$$A = \arctan \frac{\tan \alpha}{\sin \theta}$$

, $\alpha \in (0°, 90°)$ , $\theta \in (-180°, 180°)$ ,wherein, $\alpha$ is the solar altitude angle, $\theta$ is a solar azimuth angle, the solar azimuth angle is an angle between a projection of a line connecting sun and the photovoltaic module on horizontal plane and south direction, the solar azimuth angle is negative when the projection is on eastern semi-axis, and the solar azimuth angle is positive when the projection is on western semi-axis.

In one embodiment of the present application, when the two adjacent rows of the photovoltaic modules are not located at the same horizontal height, a calculation formula of the second angle is:

$$B_1 = 180° - A - \arcsin \frac{\left(\dfrac{D}{\cos P}\right) * \sin(A - P)}{L / 2}$$

, wherein, $P$ is an angle between a line connecting centers of the two adjacent rows of the photovoltaic modules and the horizontal plane.

In one embodiment of the present application, the backtracking angle optimization method further comprises controlling the photovoltaic system to adopt the second optimization method when the solar altitude angle is greater than the first threshold, multiple rows of the photovoltaic modules include a first row of the photovoltaic modules and rear rows of the photovoltaic modules, and the second optimization method is suitable for adjusting the tracking angle so that the tracking angle of the first row of the photovoltaic modules is a third angle, the tracking angle of each of the rear rows of the photovoltaic modules is a fourth angle, and the fourth angle is the tracking angle of the each of the rear rows of the photovoltaic modules just not shielded by a row of the photovoltaic modules in front of the rear row of the photovoltaic modules; wherein, the first row of the photovoltaic modules is a first row of the photovoltaic modules at one end of the multiple rows of the photovoltaic modules close to sun in the horizontal direction.

In one embodiment of the present application, the third angle meets: $L * \cos B_2 + \dfrac{L * \sin B_2}{\tan A} = D$ , wherein, $B_2$ is the third angle, $A$ is an incident angle of sunlight in a plane perpendicular to an axial direction of a flat uniaxial axis, D is a horizontal distance between two adjacent rows of the photovoltaic modules, and L is a length of the photovoltaic module along a first direction when the photovoltaic modules are at a horizontal angle; wherein, the first direction is perpendicular to the axial direction of the flat uniaxial axis; a calculation formula of the incident angle of sunlight is: $A = \arctan \dfrac{\tan \alpha}{\sin \theta}$ , $\alpha \in (0°, 90°)$, $\theta \in (-180°, 180°)$ ,wherein, $\alpha$ is the solar altitude angle, $\theta$ is a solar azimuth angle, the solar azimuth angle is an angle between a projection of a line connecting sun and the photovoltaic module in the two adjacent rows of the photovoltaic modules on horizontal plane and south direction, the solar azimuth angle is negative when the projection is on eastern semi-axis, and the solar azimuth angle is positive when the projection is on western semi-axis.

In one embodiment of the present application, the fourth angle meets:

$$\frac{L * \cos B}{2} + \frac{L * \cos B_3}{2} + \frac{L * \sin B + L * \sin B_3}{2 * \tan A} = D$$

,wherein, $B_3$ is the fourth angle of a current rear row of the photovoltaic modules, $B$ is the tracking angle of a row of the photovoltaic modules in front of the current rear row of the photovoltaic modules; wherein, when the row of the photovoltaic modules in front of the current rear row is the first row of the photovoltaic modules, $B = B_2$.

In one embodiment of the present application, when two adjacent rows of the photovoltaic modules are not located at the same horizontal height, a calculation formula of the fourth angle is:

$$\frac{L * \cos B}{2} + \frac{L * \cos B_3}{2} + \frac{L * \sin B + L * \sin B_3 + 2 * \tan P * D}{2 * \tan A} = D$$

, wherein, $P$ is an angle between a line connecting center of the two adjacent rows of the photovoltaic modules and the horizontal plane.

In one embodiment of the present application, the backtracking angle optimization method further comprises controlling the photovoltaic system to only adopt the second optimization method when a number of rows of the photovoltaic modules is greater than 8.

In one embodiment of the present application, the backtracking angle optimization method further comprises: before executing the first optimization method or the second optimization method, first judging whether a current weather meets weather conditions, and when a judgment result is no, controlling the photovoltaic system to adopt a high scattered radiation weather tracking angle optimization method, so that the tracking angle of each row of the photovoltaic modules is less than or equal to a second threshold, wherein the second threshold $S$ meets: $0° \leq S \leq 10°$.

The present application further provides a photovoltaic support control system, used to execute the backtracking angle optimization method based on a series-parallel structure photovoltaic module according to any one of the above embodiments to control a photovoltaic system including multiple rows of photovoltaic modules, and the photovoltaic support control system includes a central controller and multiple support controllers, wherein, the central controller is configured to send optimization instructions to the multiple support controllers based on the backtracking angle optimization method; and each support controller is configured as: calculating a support tracking angle to control a rotation of a corresponding row of the photovoltaic modules after receiving the optimization instructions; and feeding an actual angle of the corresponding row of the photovoltaic modules back to the central controller, so that the central controller generates the optimization instructions according to the actual angle and based on the backtracking angle optimization method.

Compared with the prior arts, a backtracking angle optimization method based on a series-parallel structure photovoltaic module provided by the present application is particularly suitable for uneven terrain and photovoltaic modules with series-parallel structures such as half-cut photovoltaic modules, which can effectively improve the power generation in the backtracking phase Compared with the prior arts of reducing the shadow obstruction between arrays by reducing support angles.

Brief Description of the Drawings

The drawings are included to provide a further understanding of the present application, and they are included and constitute a part of the present application, the drawings show the embodiments of the present application, and serving to explain the principles of the present application together with the description. In the drawings:

FIG. 1 is a flow chart of a backtracking angle optimization method based on a series-parallel structure photovoltaic module in an embodiment of the present application;
FIG. 2 is a flow chart of a backtracking angle optimization method based on a series-parallel structure photovoltaic module in another embodiment of the present application;
FIG. 3 is a schematic view of photovoltaic half-cut modules using a first optimization method in an embodiment of the present application;
FIG. 4 is a schematic view of photovoltaic half-cut modules using a second optimization method in an embodiment of the present application;
FIG. 5 is a schematic view of a photovoltaic half-cut module in an embodiment of the present application; and
FIG. 6 is a schematic view of a photovoltaic support control system in an embodiment of the present application.

Preferred Embodiment of the Present Application

In order to illustrate the technical solutions in the embodiments of the present application more clearly, the drawings that need to be used in the description of the embodiments will be briefly introduced below. Obviously, the drawings in the following description are only some embodiments of the present application, and for those skilled in the art, other drawings can also be obtained based on these drawings without creative effort. Unless otherwise indicated by the language context, like reference numerals represent like structures or operations.

As indicated in this application and claims, the terms "a", "an", "a kind of" and/or "the" do not specifically refer to the singular and may include the plural unless the context clearly indicates an exception. Generally speaking, the terms "comprising" and "including" only suggest the inclusion of clearly identified steps and elements, and these steps and elements do not constitute an exclusive list, and the method or device may also contain other steps or elements.

The relative arrangements of modules and steps, numerical expressions and numerical values set forth in these embodiments do not limit the scope of the present application unless specifically stated otherwise. At the same time, it should be understood that, for the convenience of description, the sizes of the various parts shown in the drawings are not drawn according to the actual proportional relationship. Techniques, methods and devices known to those of ordinary skill in the relevant art may not be discussed in detail, but where appropriate, such techniques, methods and devices should be considered part of the authorized specification. In all embodiments shown and discussed herein, any specific values should be construed as illustrative only, and not as limiting. Therefore, other examples of the exemplary embodiment may have different values. It should be noted that like numerals and letters denote like items in the following figures, therefore, once an item is defined in one figure, it does not require further discussion in subsequent drawings.

In the description of the present application, it should be understood that orientation words such as "front, back, up, down, left, right", " landscape, portrait, vertical, horizontal" and "top, bottom" etc. indicating the orientation or positional relationship is generally based on the orientation or positional relationship shown in the drawings, only for the convenience of describing the application and simplifying the description, in the absence of a contrary statement, these orientation words do not indicate or imply that the device or element referred to must have a specific orientation or be constructed and operated in a specific orientation, and therefore cannot be construed as limiting the scope of protection of this application;

the orientation words "inside and outside" refer to inside and outside relative to the outline of each part itself.

For the convenience of description, spatially relative terms may be used here, such as "on ...", "over ...", "on the upper surface of ...", "above", etc., to describe the spatial positional relationship between one device or feature and other devices or features. It will be understood that, in addition to the orientation depicted in the drawings, the spatially relative terms are intended to encompass different orientations of the device in use or operation. For example, if the device in the drawings is turned over, devices described as "on other devices or configurations " or "above other devices or configurations " would then be oriented "beneath other devices or configurations " or "under other devices or configurations ". Thus, the exemplary term "above" can encompass both an orientation of "above" and "beneath". The device may be otherwise oriented (rotated 90 degrees or at other orientations), and making a corresponding explanation for the space relative description used here.

In addition, it should be noted that the use of words such as "first" and "second" to define modules is only for the convenience of distinguishing corresponding modules, unless otherwise stated, the above words have no special meanings, and therefore cannot be construed as limiting the protection scope of the present application. In addition, although the terms used in this application are selected from well-known and commonly used terms, some terms mentioned in the specification of this application may be selected by the applicant according to his or her judgment, and their detailed meanings are listed in this article described in the relevant section of the description. Furthermore, it is required that this application be understood not only by the actual terms used, but also by the meaning implied by each term.

The flow chart is used in this application to illustrate the operations performed by the system according to the embodiment of this application. It should be understood that the preceding or following operations are not necessarily performed in an exact order. Instead, various steps may be processed in reverse order or concurrently. At the same time, other operations can either add to these procedures, or a certain step or steps can be removed from these procedures.

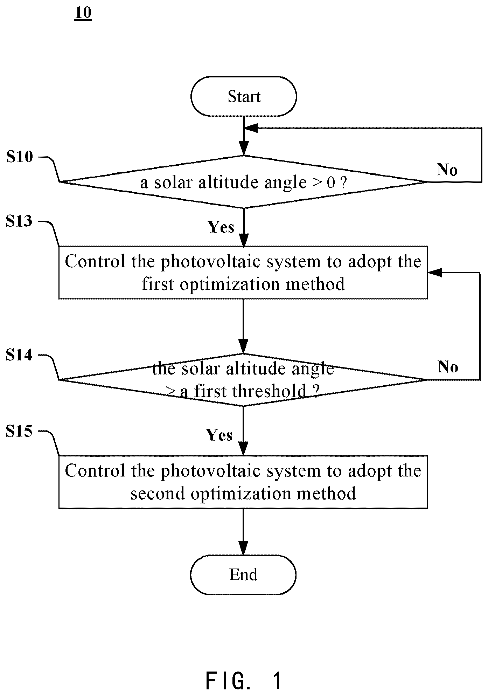

FIG. 1 is a flow chart of a backtracking angle optimization method based on a series-parallel structure photovoltaic module in an embodiment of the present application. Referring to FIG. 1, the present application provides a backtracking angle optimization method 10 based on a series-parallel structure photovoltaic module (hereinafter referred to as "backtracking angle optimization method 10") suitable for switching between a first optimization method and a second optimization method under different conditions. Wherein, the first optimization method comprises controlling the each row of photovoltaic modules to shield at most a portion of a first area of a row of the photovoltaic modules behind the each row of the photovoltaic modules; the second optimization method comprises controlling such that there is no shielding between adjacent rows of the photovoltaic modules. The backtracking angle optimization method 10 is suitable for a photovoltaic system using series-parallel structure photovoltaic modules, and the photovoltaic system comprises multiple rows of the series-parallel structure photovoltaic modules, and when the each row of the photovoltaic modules is shielded in a manner not exceeding the first area, at least a portion of the photovoltaic modules outside of the first area can still operate at a normal power generation efficiency. In various embodiments of the present application, such series-parallel structures can be understood as modules with series-parallel structures such as half-cut photovoltaic modules. For such module, since an internal structure of the module is divided into relatively independent working areas using the series-parallel structures, even if a portion of the module is shielded, a remaining portion of the module can still work at normal power generation efficiency. In particular, the first area mentioned above can be specifically understood as the largest area of the photovoltaic module that can be shielded without affecting the power generation of remaining parts.

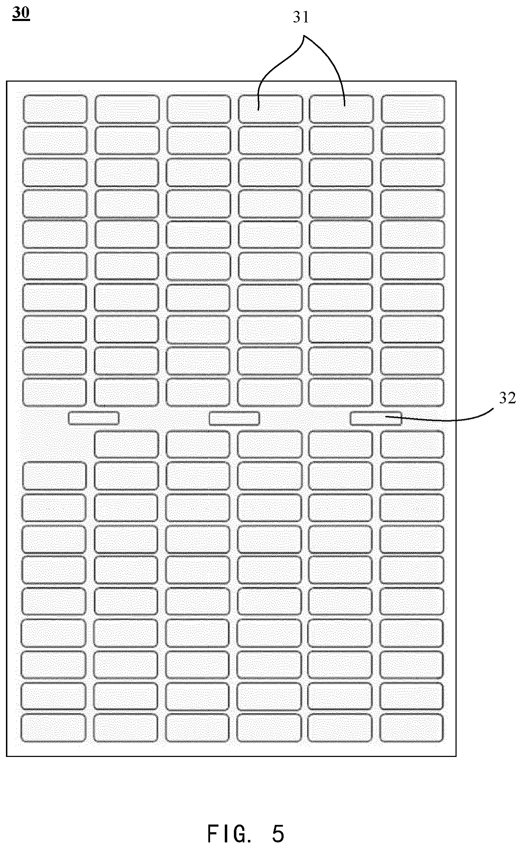

To better understand characteristics of aforementioned series-parallel structure photovoltaic modules, FIG. 5 illustratively shows a schematic view of a series-parallel module suitable for the backtracking angle optimization method 10 shown in FIG. 1. Specifically, FIG. 5 illustrates a schematic structural view of a typical half-cut module 30. Taking the half-cut module 30 shown in FIG. 5 as an example, two or more solar cells 31 in the half-cut module 30 are connected by busbars. Even if the solar cells 31 on one side of a junction box 32 (e.g. , a upper half of the half-cut module 30 in FIG. 5 ) are completely shielded by shadows, the power generation efficiency of a portion on other side of the junction box 32 (e.g., a lower half of the half-cut module 30 in FIG. 5 ) is not affected. In this case, the first area described above represents a half area of the photovoltaic module.

Specifically, the backtracking angle optimization method 10 includes the following steps:

S10: Judge whether a solar altitude angle is greater than 0. If so, execute step S13. If not, restart a cycle and judge.
S13: Control the photovoltaic system to adopt the first optimization method.
S14: Judge whether the solar altitude angle is greater than a first threshold, if so, execute step S15, if not, execute step S13.
S15: Control the photovoltaic system to adopt the second optimization method.

Specifically, in step S10, it first judges whether the solar altitude angle is greater than 0. It can be understood that the solar altitude angle is an angle between an incident direction of sunlight and a horizontal direction. The solar altitude angle is less than 0 when sun has not risen, and the solar altitude angle is equal to 0 when the sun rises. In both cases, there is no direct sunlight on the photovoltaic module, and there is no need to control the photovoltaic module to rotate.

Specifically, the first optimization method in the step S13 is to adjust a tracking angle of the photovoltaic modules so that the tracking angle of a last row of the photovoltaic modules is a first angle, and the tracking angle of each remaining row of the photovoltaic modules is a second angle. Wherein, the first angle is a maximum rotation angle of the photovoltaic modules. It can be understood that in actual use, the photovoltaic modules are not able to rotate freely. Their rotation is restricted by various conditions, such as hardware limitations of the photovoltaic supports used to mount the photovoltaic modules. In addition, for a sake of power generation efficiency, staff in this art will also limit the tracking angle of the photovoltaic modules through software settings and other methods.

Furthermore, the second angle in this embodiment is the tracking angle of a said row of the photovoltaic modules when the said row of the photovoltaic modules can just shield the portion of the first area of a row of the photovoltaic modules behind the said row of the photovoltaic modules. That is, a maximum tracking angle that does not affect normal operation of areas other than the first area.

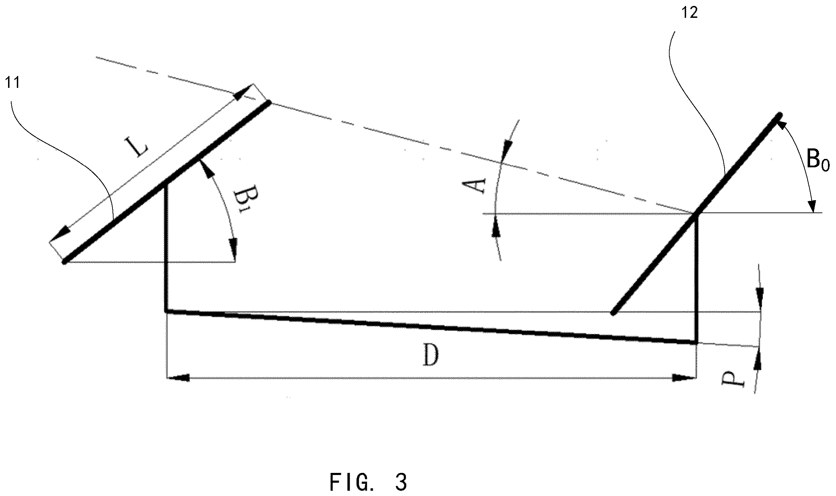

FIG. 3 is a schematic view of photovoltaic half-cut modules using the first optimization method in an embodiment of the present application. Specifically, FIG. 3 shows a last row of a photovoltaic module 11 and a second-to-last row of a photovoltaic module 12. Referring to FIG. 1 and FIG. 3, and taking the photovoltaic modules 11 and 12 in FIG. 3 as an example, when both rows of the photovoltaic modules 11 and 12 use half-cut modules, the first optimization method controls the photovoltaic modules 11 and 12 to rotate when the solar altitude angle is greater than 0 and less than the first threshold, so that the tracking angle of the last row of the photovoltaic module 12 is a first angle $B_0$, and the tracking angle of the second-to-last row of the photovoltaic module 11 is a second angle $B_1$, and a calculation formula of the second angle $B_1$ is:

$$B_1 = 180° - A - \arcsin \frac{D * \sin A}{L/2} \qquad \text{Formula 1,}$$

In the Formula 1, $A$ is an incident angle of sunlight in a plane perpendicular to an axial direction of a flat uniaxial axis, D is a horizontal distance between the photovoltaic modules 11 and 12, and L is a length of the photovoltaic modules 11 and 12 along a first direction when the photovoltaic modules 11 and 12 are at a horizontal angle, wherein, the first direction is perpendicular to the axial direction of the flat uniaxial axis; wherein, a calculation formula of the incident angle of the sunlight is:

$$A = \arctan \frac{\tan \alpha}{\sin \theta}, \quad \alpha \in (0°, 90°), \quad \theta \in (-180°, 180°) \qquad \text{Formula 2,}$$

wherein, $\alpha$ is the solar altitude angle, $\theta$ is a solar azimuth angle, the solar azimuth angle is an angle between a projection of a line connecting sun and the photovoltaic module on horizontal plane and south direction, and in this embodiment, the solar azimuth angle is negative when the projection is on eastern semi-axis, and the solar azimuth angle is positive when the projection is on western semi-axis.

Furthermore, what is shown in FIG. 3 is a preferred embodiment of the present application is shown. In this embodiment, the photovoltaic modules 11 and 12 are not located at the same horizontal height. In this case, a calculation formula of the second angle $B_1$ is:

$$B_1 = 180° - A - \arcsin \frac{\left(\dfrac{D}{\cos P}\right) * \sin(A - P)}{L/2} \qquad \text{Formula 3,}$$

wherein, $P$ is an angle between the horizontal plane and a line connecting two adjacent rows of the photovoltaic modules 11 and 12. It can be understood that when the value of $P$ is 0, that is, when two adjacent photovoltaic modules 13 and 14 are located on the same horizontal plane, the Formula 3 is equivalent to the Formula 1.

Referring to FIG. 1 to FIG. 3, in step S14, it is determined whether the solar altitude angle $\alpha$ is greater than the first threshold. It can be understood that in step S13, the first optimization method is used to control the tracking angle of the last row of the photovoltaic modules to first angle $B_0$ which is the maximum rotation angle of the photovoltaic modules, and the tracking angle of remaining photovoltaic modules to the second angle $B_1$ which satisfies the Formula 3 above. As the solar altitude angle $\alpha$ gradually increases, the second angle $B_1$ will eventually increase to the first angle $B_0$. At this time, as the solar altitude angle $\alpha$ continues to increase, a maximum shielding area between two adjacent photovoltaic modules will not exceed the first area (in the case of the half-cut module, it is half of area of the half-cut module). At this time, in order to maximize power generation, it switches to the second optimization method.

In short, the backtracking angle optimization method provided in this application no longer adopts the first optimization method when the solar altitude angle is greater than the first threshold, but switches to the second optimization method, of course, the premise of which is that all other necessary conditions are met, such as weather, etc.

Specifically, the second optimization method in step S15 is: adjusting the tracking angle of the photovoltaic modules, wherein the photovoltaic modules include a first row of the photovoltaic modules and rear rows of the photovoltaic modules. Specifically, the first row of the photovoltaic modules is a first row of the photovoltaic modules at one end of the multiple rows of the photovoltaic modules close to sun in the horizontal direction. For example, if the sun is on the east side in the morning, the photovoltaic modules on the easternmost side are current first row of the photovoltaic modules; and the photovoltaic modules on the westernmost side are the current first row of the photovoltaic modules when the sun is on the west side in the afternoon. The second optimization method makes the tracking angle of the first row of photovoltaic modules a third angle, and the tracking angle of each of the rear rows of the photovoltaic modules is a fourth angle, wherein the fourth angle is the tracking angle of each rear row of the photovoltaic modules just not shielded by a row of the photovoltaic modules in front of the said rear row of the photovoltaic modules. It can be understood that when there is more than one rear row of the photovoltaic modules, the fourth angle corresponding to each rear row of the photovoltaic modules is not necessarily the same.

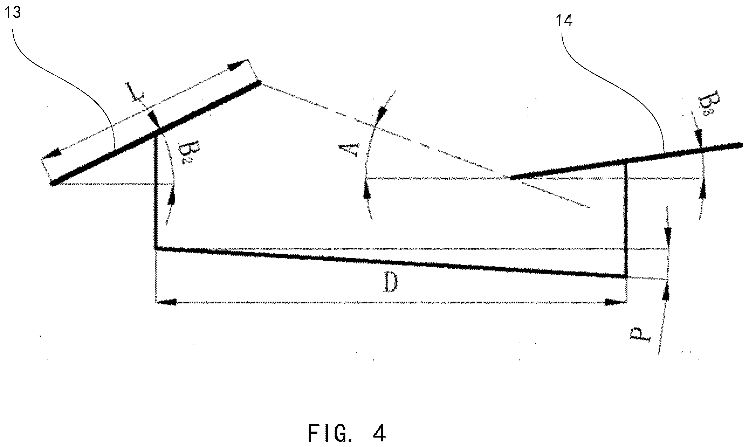

FIG. 4 is a schematic view of photovoltaic modules using a second optimization method in an embodiment of the present application. Specifically, FIG. 4 illustrates a first row of a photovoltaic module 13 and a rear row of a photovoltaic module 14. Referring to FIG. 1 and FIG. 4 , and taking the photovoltaic modules 13 and 14 in FIG. 4 as an example, the second optimization method controls the photovoltaic modules 13 and 14 to rotate when the solar altitude angle is greater than the first threshold, such that the tracking angle of the photovoltaic module 13 is a third angle $B_2$, the tracking angle of the photovoltaic module 14 is a fourth angle $B_3$, and at this time, the first row of the photovoltaic module 13 does not shield the second row of the photovoltaic module 14.

Furthermore, in the embodiment shown in FIG. 4, the third angle $B_2$ of the photovoltaic module 13 meets:

$$L * \cos B_2 + \frac{L * \sin B_2}{\tan A} = D \qquad \text{Formula 4,}$$

wherein, A is an incident angle of sunlight in a plane perpendicular to an axial direction of a flat uniaxial axis, D is a horizontal distance between the photovoltaic module 13 and 14, $L$ is a length of the photovoltaic module 13 and 14 along the first direction when the photovoltaic modules 13 and 14 are at a horizontal angle, the first direction is perpendicular to the axial direction of the flat uniaxial axis, and a calculation formula for the incident angle of the sunlight A is also the same as Formula 2 mentioned above.

Furthermore, in the embodiment shown in FIG. 4, the fourth tracking angle $B_3$ of the photovoltaic module 14 meets:

$$\frac{L * \cos B}{2} + \frac{L * \cos B_3}{2} + \frac{L * \sin B + L * \sin B_3}{2 * \tan A} = D \qquad \text{Formula 5,}$$

wherein, B is the tracking angle of the photovoltaic module 13 in the row preceding the current rear row of the photovoltaic module 14, A is an incident angle of sunlight in a plane perpendicular to an axial direction of a flat uniaxial axis, D is a horizontal distance between the photovoltaic module 13 and 14, $L$ is a length of the photovoltaic module 13 and 14 along the first direction when the photovoltaic modules 13 and 14 are at a horizontal angle, and a calculation formula for the incident angle of the sunlight A is also the same as Formula 2 mentioned above. It can be understood that in this embodiment, the photovoltaic module in the row preceding the rear row of the photovoltaic module 14 is the first row of the photovoltaic module 13, and in this case $B = B_2$.

Furthermore, a preferred embodiment of the present application is shown in FIG. 4. In this embodiment, the photovoltaic modules 13 and 14 are not located at the same horizontal height. In this case, a formula of the third angle $B_2$ does not change, while a calculation formula of the fourth angle $B_3$ is:

$$\frac{L * \cos B}{2} + \frac{L * \cos B_3}{2} + \frac{L * \sin B + L * \sin B_3 + 2 * \tan P * D}{2 * \tan A} = D \qquad \text{Formula 6,}$$

wherein, $P$ is an angle between the horizontal plane and a line connecting two adjacent rows of the photovoltaic modules 13 and 14. It can be understood that when the value of the $P$ is 0, that is, when two adjacent photovoltaic modules are located on the same horizontal plane, the Formula 6 is equivalent to the Formula 5.

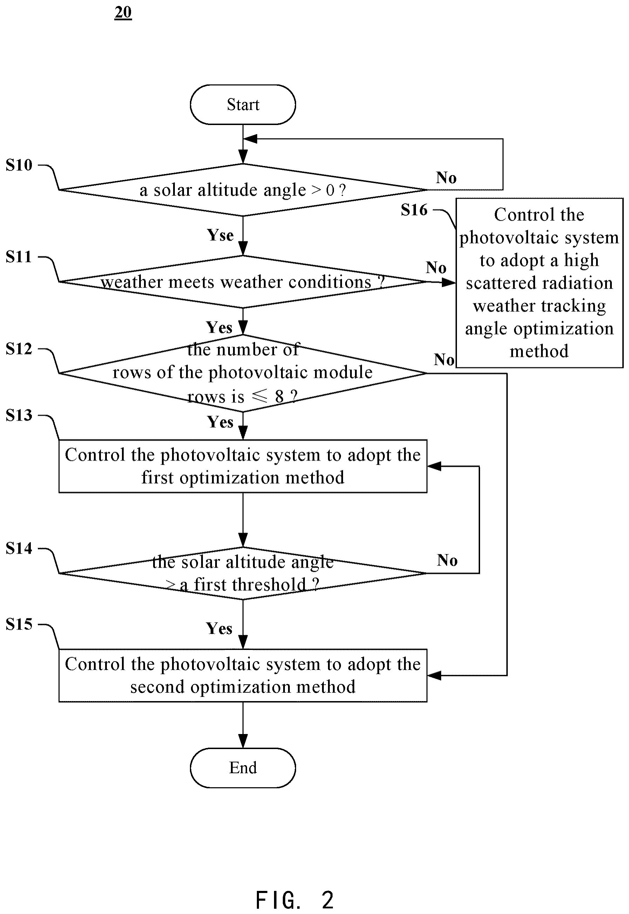

FIG. 2 is a flow chart of a backtracking angle optimization method in another embodiment of the present application. Referring to FIG. 2, in some embodiments of the present application, a backtracking angle optimization method 20 further includes step 12: judging whether a number of rows of the photovoltaic modules is less than or equal to 8. If so, execute step S13. If not, execute step S15. In other words, in this embodiment, when the number of rows of the photovoltaic modules is greater than 8, it controls the photovoltaic system to only adopt the second optimization method.

FIG. 2 shows a preferred embodiment of the present application. In this embodiment, the backtracking angle optimization method 20 includes the following steps:

S10: Judge whether the solar altitude angle is greater than 0. If so, execute step S13. If not, restart a cycle.

S11: Judge whether weather meets weather conditions. If so, execute step S12. If not, execute step S16.

S12: Judge whether the number of rows of the photovoltaic module rows is ≤ 8. If so, execute step S13. If not, execute step S15.

S13: Control the photovoltaic system to adopt the first optimization method.

S14: Judge whether the solar altitude angle is greater than the first threshold, if so, execute step S15, if not, execute step S13.

S15: Control the photovoltaic system to adopt the second optimization method.

S16: Control the photovoltaic system to adopt a high scattered radiation weather tracking angle optimization method.

Compared to a previous embodiment, the method 20 shown in FIG. 2 further includes step S11: Judge whether weather meets weather conditions. If so, execute step S12. If not, execute step S16. Specifically, in this embodiment, the backtracking angle optimization method adopts the first optimization method or the second optimization method only when the weather meets the weather conditions (sunny or cloudy). Otherwise, the photovoltaic system is controlled to adopt the high scattered radiation weather tracking angle optimization method. It should be noted that, the tracking angle is an angle between the photovoltaic module and the horizontal direction, a second threshold is a relatively small angle, and the high scattered radiation weather tracking angle optimization method makes the tracking angle of each row of the photovoltaic modules less than or equal to the second threshold, that is, the photovoltaic modules are controlled to rotate to a relatively small tracking angle or directly flat (parallel to the horizontal direction). In one embodiment of the present invention, the second threshold is 10°. It can be understood that the second threshold can be a preset value or customized by technicians based on actual conditions.

Furthermore, the method shown in FIG. 2 further includes step S12: Judge whether the number of rows of the photovoltaic module rows is ≤ 8. If so, execute step S13. If not, execute step S15.

Compared to the backtracking angle optimization method 10 shown in FIG. 1, the backtracking angle optimization method 20 provided by the embodiment shown in FIG. 2 has a wider application range, is applicable to more weather conditions, and takes into account an impact of the number of rows of the photovoltaic modules on power generation efficiency, thereby reducing a required cost.

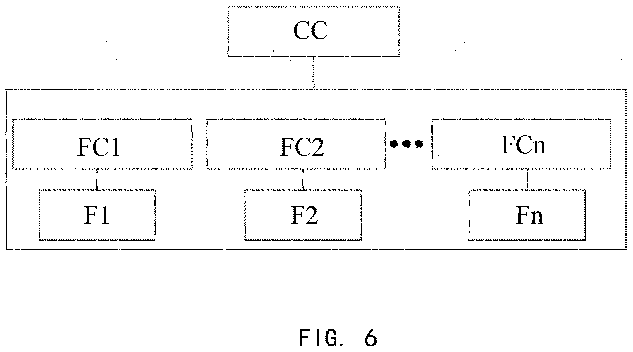

FIG. 6 is a schematic view of a photovoltaic support control system controlling multiple rows of the photovoltaic modules in an embodiment of the present application. Referring to FIG. 6, the present application further provides a photovoltaic support control system, used to execute the backtracking angle optimization method 10 or 20 based on the series-parallel structure photovoltaic modules according to any of preceding embodiments, to control a photovoltaic system including multiple rows of the photovoltaic modules. The photovoltaic support control system includes a central controller CC and multiple support controllers FC1, FC2, ..., FCn. Wherein, the central controller CC is configured to send optimization instructions to the multiple support controllers FC1, FC2, ..., FCn based on the backtracking angle optimization method; and each support controller (FC1, FC2, ..., FCn) is configured as: calculating a support tracking angle to control rotation of a corresponding row of the photovoltaic modules (F1, F2, ..., Fn) after receiving the optimization instructions; and feeding an actual angle of the corresponding row of the photovoltaic modules (F1, F2, ..., Fn) back to the central controller CC, so that the central controller CC generates the optimization instructions according to the actual angle and based on the backtracking angle optimization method.

The basic concepts have been described above, obviously, for those skilled in the art, the above disclosure of the application is only an example, and does not constitute a limitation to the present application. Although not expressly stated here, various modifications, improvements and amendments to this application may be made by those skilled in the art. Such modifications, improvements, and amendments are suggested in this application, so such modifications, improvements, and amendments still belong to the spirit and scope of the exemplary embodiments of this application.

Meanwhile, the present application uses specific words to describe the embodiments of the present application. For example, "one embodiment", "an embodiment", and/or "some embodiments" refer to a certain feature, structure or characteristic related to at least one embodiment of the present application. Therefore, it should be emphasized and noted that two or more references to "one embodiment" or "an embodiment" or "an alternative embodiment" in different places in this specification do not necessarily refer to the same embodiment. In addition, certain features, structures or characteristics of one or more embodiments of the present application may be properly combined.

In the same way, it should be noted that in order to simplify the expression disclosed in the present application and help the understanding of one or more embodiments of the application, in the foregoing description of the embodiments of the present application, sometimes multiple features are combined into one embodiment, drawings or descriptions thereof. However, this method of disclosure does not imply that the subject matter of the application requires more features than are recited in the claims. Indeed, embodiment features are less than all features of a single foregoing disclosed embodiment.

In some embodiments, numbers describing the quantity of modules and attributes are used, it should be understood that such numbers used in the description of the embodiments use the modifiers "about", "approximately" or "substantially" in some examples. Unless otherwise stated, "about", "approximately" or "substantially" indicates that the stated figure allows for a variation of ±20%. Accordingly, in some embodiments, the numerical parameters used in the specification and claims are approximations that can vary depending upon the desired characteristics of individual embodiments. In some embodiments, numerical parameters should take into account the specified significant digits and adopt the general digit reservation method. Although the numerical ranges and parameters used in some embodiments of the present application to confirm the breadth of the scope are approximate values, in specific embodiments, such numerical values are set as precisely as practicable.

Although the present application has been described with reference to the current specific embodiments, those of ordinary skill in the art should recognize that the above embodiments are only used to illustrate the present application, and various equivalent changes or substitutions can also be made without departing from the spirit of the present application, therefore, as long as the changes and modifications to the above-mentioned embodiments are within the spirit of the present application, they will all fall within the scope of the claims of the present application.

**Claims**

1. A backtracking angle optimization method based on a series-parallel structure photovoltaic module, wherein the backtracking angle optimization method is suitable for a photovoltaic system using series-parallel structure photovoltaic modules, and the photovoltaic system comprises multiple rows of the series-parallel structure photovoltaic modules, and when each row of the photovoltaic modules is shielded in a manner not exceeding a first area, at least a portion of the photovoltaic modules outside of the first area can still operate at a normal power generation efficiency, **characterized in that**, the backtracking angle optimization method comprises switching execution of a first optimization method and a second optimization method, wherein:

   the first optimization method comprises controlling the each row of the photovoltaic modules to shield at most a portion of the first area of a row of the photovoltaic modules behind the each row of the photovoltaic modules;
   the second optimization method comprises controlling such that there is no shielding between every two adjacent rows of the photovoltaic modules.

2. The backtracking angle optimization method based on a series-parallel structure photovoltaic module of claim 1, **characterized by** further comprising controlling the photovoltaic system using the first optimization method to adjust a tracking angle when a solar altitude angle is greater than 0 and less than a first threshold, so that the tracking angle of a last row of the photovoltaic modules is a first angle and the tracking angle of each remaining row of the photovoltaic modules is a second angle; wherein,

   the solar altitude angle is an angle between an incident direction of sunlight and a horizontal direction;
   the tracking angle is an angle between the photovoltaic module and the horizontal direction;
   the first angle is a maximum rotation angle of the photovoltaic modules;
   the second angle is the tracking angle of a said row of the photovoltaic modules when the said row of the photovoltaic modules can just shield the portion of the first area of a row of the photovoltaic modules behind the said row of the photovoltaic modules;
   the first threshold is the solar altitude angle when the second angle is equal to the first angle.

3. The backtracking angle optimization method based on a series-parallel structure photovoltaic module of claim 2, **characterized in that**, multiple rows of the photovoltaic modules include half-cut modules, and a calculation formula of the second angle is:

$$B_1 = 180° - A - \arcsin \frac{D*\sin A}{L/2},$$

wherein, $B_1$ is the second angle, $A$ is an incident angle of sunlight in a plane perpendicular to an axial direction of a flat uniaxial axis, $D$ is a horizontal distance between two adjacent rows of the photovoltaic modules, and $L$ is a length of the photovoltaic modules along a first direction when the photovoltaic modules are at a horizontal angle; wherein,

the first direction is perpendicular to the axial direction of the flat uniaxial axis; a calculation formula of the incident angle of the sunlight is: $A = \arctan \dfrac{\tan \alpha}{\sin \theta}$ , $\alpha \in (0°, 90°)$, $\theta \in (-180°, 180°)$,

wherein, $\alpha$ is the solar altitude angle, $\theta$ is a solar azimuth angle, the solar azimuth angle is an angle between a projection of a line connecting sun and the photovoltaic module on horizontal plane and south direction, the solar azimuth angle is negative when the projection is on eastern semi-axis, and the solar azimuth angle is positive when the projection is on western semi-axis.

4. The backtracking angle optimization method based on a series-parallel structure photovoltaic module of claim 3, **characterized in that**, when the two adjacent rows of the photovoltaic modules are not located at the same horizontal height, a calculation formula of the second angle is:

$$B_1 = 180° - A - \arcsin \frac{\left( \dfrac{D}{\cos P} \right) * \sin(A - P)}{L/2} ,$$

wherein, $P$ is an angle between a line connecting centers of the two adjacent rows of the photovoltaic modules and the horizontal plane.

5. The backtracking angle optimization method based on a series-parallel structure photovoltaic module of claim 2, **characterized by** further comprising controlling the photovoltaic system to adopt the second optimization method when the solar altitude angle is greater than the first threshold, multiple rows of the photovoltaic modules include a first row of the photovoltaic modules and rear rows of the photovoltaic modules, and the second optimization method is suitable for adjusting the tracking angle so that the tracking angle of the first row of the photovoltaic modules is a third angle, the tracking angle of each of the rear rows of the photovoltaic modules is a fourth angle, and the fourth angle is the tracking angle of the each of the rear rows of the photovoltaic modules just not shielded by a row of the photovoltaic modules in front of the rear row of the photovoltaic modules; wherein,

the first row of the photovoltaic modules is a first row of the photovoltaic modules at one end of the multiple rows of the photovoltaic modules close to sun in the horizontal direction.

6. The backtracking angle optimization method based on a series-parallel structure photovoltaic module of claim 5, **characterized in that**, the third angle meets:

$$L * \cos B_2 + \frac{L * \sin B_2}{\tan A} = D ,$$

wherein, $B_2$ is the third angle, $A$ is an incident angle of sunlight in a plane perpendicular to an axial direction of a flat uniaxial axis, D is a horizontal distance between two adjacent rows of the photovoltaic modules, and L is a length of the photovoltaic module along a first direction when the photovoltaic modules are at a horizontal angle; wherein, the first direction is perpendicular to the axial direction of the flat uniaxial axis; a calculation formula of the incident angle of sunlight is:

$$A = \arctan \frac{\tan \alpha}{\sin \theta} , \quad \alpha \in (0°, 90°) , \quad \theta \in (-180°, 180°) ,$$

wherein, $\alpha$ is the solar altitude angle, $\theta$ is a solar azimuth angle, the solar azimuth angle is an angle between a projection of a line connecting sun and the photovoltaic module in the two adjacent rows of the photovoltaic modules on horizontal plane and south direction, the solar azimuth angle is negative when the projection is on eastern semi-axis, and the solar azimuth angle is positive when the projection is on western semi-axis.

7. The backtracking angle optimization method based on a series-parallel structure photovoltaic module of claim 6, **characterized in that**, the fourth angle meets:

$$\frac{L*\cos B}{2}+\frac{L*\cos B_3}{2}+\frac{L*\sin B+L*\sin B_3}{2*\tan A}=D,$$

wherein, $B_3$ is the fourth angle of a current rear row of the photovoltaic modules, $B$ is the tracking angle of a row of the photovoltaic modules in front of the current rear row of the photovoltaic modules; wherein,
when the row of the photovoltaic modules in front of the current rear row is the first row of the photovoltaic modules, $B = B_2$.

8. The backtracking angle optimization method based on a series-parallel structure photovoltaic module of claim 7, **characterized in that**, when two adjacent rows of the photovoltaic modules are not located at the same horizontal height, a calculation formula of the fourth angle is:

$$\frac{L*\cos B}{2}+\frac{L*\cos B_3}{2}+\frac{L*\sin B+L*\sin B_3+2*\tan P*D}{2*\tan A}=D,$$

wherein, $P$ is an angle between a line connecting center of the two adjacent rows of the photovoltaic modules and the horizontal plane.

9. The backtracking angle optimization method based on a series-parallel structure photovoltaic module according to any one of claims 1 to 8, **characterized by** further comprising controlling the photovoltaic system to only adopt the second optimization method when a number of rows of the photovoltaic modules is greater than 8.

10. The backtracking angle optimization method based on a series-parallel structure photovoltaic module according to any one of claims 1 to 8, **characterized by** further comprising: before executing the first optimization method or the second optimization method, first judging whether a current weather meets weather conditions, and when a judgment result is no, controlling the photovoltaic system to adopt a high scattered radiation weather tracking angle optimization method, so that the tracking angle of each row of the photovoltaic modules is less than or equal to a second threshold, wherein the second threshold $S$ meets: $0° \leq S \leq 10°$.

11. A photovoltaic support control system, used to execute the backtracking angle optimization method based on a series-parallel structure photovoltaic module according to any one of claims 1 to 10 to control a photovoltaic system including multiple rows of photovoltaic modules, **characterized in that**, the photovoltaic support control system includes a central controller and multiple support controllers, wherein,

the central controller is configured to send optimization instructions to the multiple support controllers based on the backtracking angle optimization method;
and each support controller is configured as:

calculating a support tracking angle to control a rotation of a corresponding row of the photovoltaic modules after receiving the optimization instructions; and
feeding an actual angle of the corresponding row of the photovoltaic modules back to the central controller, so that the central controller generates the optimization instructions according to the actual angle and based on the backtracking angle optimization method.

10

```
                         ┌─────────────┐
                         │    Start    │
                         └──────┬──────┘
                                │         ◄──────────────┐
                                ▼                        │
S10 ┐          ╱─────────────────────────────╲   No     │
    └──────── ⟨   a solar altitude angle > 0 ? ⟩─────────┘
               ╲─────────────────────────────╱
                                │
S13 ┐                          │ Yes
    └──────┌─────────────────────────────────────┐
           │ Control the photovoltaic system to adopt the │  ◄──────┐
           │        first optimization method             │         │
           └───────────────────┬─────────────────┘                  │
                               │                                     │
                               ▼                                     │
S14 ┐          ╱─────────────────────────────╲    No                │
    └──────── ⟨    the solar altitude angle     ⟩──────────────────┘
               ╲     ≥ a first threshold ?     ╱
                ╲───────────────────────────╱
                               │
S15 ┐                          │ Yes
    └──────┌─────────────────────────────────────┐
           │ Control the photovoltaic system to adopt the │
           │       second optimization method             │
           └───────────────────┬─────────────────┘
                               │
                               ▼
                         ┌─────────────┐
                         │    End      │
                         └─────────────┘
```

FIG.  1

20

Start

S10 — a solar altitude angle > 0 ?    No

Yse

S11 — weather meets weather conditions ?    No

Yes

S12 — the number of rows of the photovoltaic module rows is ≤ 8 ?    No

S16 — Control the photovoltaic system to adopt a high scattered radiation weather tracking angle optimization method

Yes

S13 — Control the photovoltaic system to adopt the first optimization method

S14 — the solar altitude angle ≥ a first threshold ?    No

Yes

S15 — Control the photovoltaic system to adopt the second optimization method

End

FIG. 2

FIG. 3

FIG. 4

30    31

32

F I G. 5

FIG. 6

## INTERNATIONAL SEARCH REPORT

| International application No. |
| --- |
| **PCT/CN2024/083528** |

| A. | CLASSIFICATION OF SUBJECT MATTER |
| --- | --- |

G05D3/12(2006.01)i

According to International Patent Classification (IPC) or to both national classification and IPC

| B. | FIELDS SEARCHED |
| --- | --- |

Minimum documentation searched (classification system followed by classification symbols)

IPC:G05D

Documentation searched other than minimum documentation to the extent that such documents are included in the fields searched

Electronic data base consulted during the international search (name of data base and, where practicable, search terms used)

CNTXT, ENTXTC, ENTXT, VEN, CNKI: 光伏, 太阳, 电池, 串联, 并联, 切半, 半切, 跟踪, 角度, 遮挡, 遮蔽, 阴影, photovoltaic, solar, sun, battery, series, parallel, semi cut, angle, trace, shelter, shadow

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116339392 A (TRINA SOLAR CO., LTD.) 27 June 2023 (2023-06-27) claims 1-11 | 1-11 |
| X | US 2023078507 A1 (ARRAY TECHNOLOGIES INC.) 16 March 2023 (2023-03-16) description, paragraphs 21-31 | 1, 9 |
| Y | US 2023078507 A1 (ARRAY TECHNOLOGIES INC.) 16 March 2023 (2023-03-16) description, paragraphs 21-31 | 10-11 |
| Y | CN 114531100 A (GUANGZHOU ZHONGXU NEW ENERGY CO., LTD.) 24 May 2022 (2022-05-24) description, paragraphs 73-74 | 10-11 |
| A | CN 105242693 A (ARCTECH SOLAR TECHNOLOGY (SUZHOU) CO., LTD.) 13 January 2016 (2016-01-13) entire document | 1-11 |
| A | US 2012042928 A1 (BECK Bernhard) 23 February 2012 (2012-02-23) entire document | 1-11 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **31 May 2024** | **19 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2024/083528**

| Patent document cited in search report | | | Publication date (day/month/year) | Patent family member(s) | | | Publication date (day/month/year) |
|---|---|---|---|---|---|---|---|
| CN | 116339392 | A | 27 June 2023 | None | | | |
| US | 2023078507 | A1 | 16 March 2023 | WO | 2023043844 | A1 | 23 March 2023 |
| CN | 114531100 | A | 24 May 2022 | None | | | |
| CN | 105242693 | A | 13 January 2016 | CN | 105242693 | B | 01 February 2019 |
| US | 2012042928 | A1 | 23 February 2012 | EP | 2421053 | A2 | 22 February 2012 |
| | | | | EP | 2421053 | A3 | 29 May 2013 |
| | | | | DE | 102010035000 | A1 | 23 February 2012 |
| | | | | DE | 102010035000 | B4 | 09 April 2015 |

Form PCT/ISA/210 (patent family annex) (July 2022)